# EUROPEAN PATENT SPECIFICATION

(11) **EP 1 013 350 B1**
(45) Date of publication and mention of the grant of the patent: **26.10.2005**
(21) Application number: 99610081.4
(22) Date of filing: 22.12.1999
(51) Int. Cl.: B09B 3/00

(54) **Method for treating municipal organic waste and plant for carrying out the method**
Verfahren und Anlage zur Behandlung von organischem Hausmüll
Procédé et installation pour le traitement de déchets organiques municipaux

(30) Priority: 23.12.1998 DK 171598
(43) Date of publication of application: 28.06.2000
(73) Proprietor: Ewoc A/S, 9620 Aalestrup (DK)
(72) Inventor: Brams, Soren, 9620 Aalestrup (DK); Sorensen, Per Leth, 5750 Ringe (DK); Jorgensen, Lars Vedel, 3660 Stenlose (DK)
(74) Representative: Joergensen, Bjoern Barker

(56) References cited:
- EP-A- 0 359 250
- EP-A- 0 767 011
- EP-A- 0 800 872
- CH-A- 656 536
- US-A- 5 361 994
- US-A- 5 389 347

## Description

The present invention relates to a method for utilizing organic domestic waste and other types of substantially organic waste, by which method the waste is divided into a fraction, from which not biologically decomposable material has been removed, and a residual fraction with a small content of biologically decomposable material. The invention also relates to a plant for carrying out the method.

In the major part of the industrialized world, efforts are being made to utilize the content of organic material in domestic waste. The aim is to use the energy and fertilizer content in the organic part of the waste.

In Denmark, it is for instance the declared intent of the Agency for the Environment by source separation in the households to remove a substantial part of the organic waste from the remaining waste flow and then subsequently to biogasify or compost this organic part.

The source separated waste is often collected in plastic or paper bags or sacks. These bags or sacks constitute a not biologically decomposable alien substance in the waste just as does the bigger or smaller amount of material which has been erroneously sorted, something which can hardly be avoided in connection with the source separated waste. This material may for instance be cans, bottles, and aluminium foil.

In addition to the source separated domestic waste similar waste fractions may be collected from super markets and factories producing foodstuff. The sum of these organic materials is in the following termed "biowaste".

When utilizing this biowaste, a number of problems of mechanical nature arises on account of plastic content, wrapping and other impurities. Furthermore, hygienic problems are encountered in connection with pre-treatment of the waste prior to biogasification or composting on account of bacteria, endotoxins and mould spurs. The hygienic problems are also encountered during the maintenance of the devices carrying out the pre-treatment.

Pre-treatment of the waste takes place according to the known technique either by a mechanical sorting or by a pulping of the whole amount of biowaste. Both methods suffer from deficiencies and only partially solve the problems. By a mechanical sorting in a sorting drum or roller sieve, a substantial amount of the undesired parts is removed, but at the same time also quite an amount of the organic material is removed. Even with a fine-meshed sieve there will still be a few smaller plastic pieces left in the biowaste after the sieving. Sieving does not solve hygienic problems.

Another solution is to pulp the biowaste in its entirety, following which floating substances and sedimentation substances are separated therefrom. By this separation also a part of the material which it is desired to biogasify is removed, and simultaneously a large quantity of a waste fraction is obtained, which is difficult to handle, which is wet and damaging from a hygienic point of view. Residues of plastic constitute a particular risk, if they are allowed to remain in the liquid during pulping or biogasification, as plasticizers and the like may be extracted.

EP-A-800 872 which is used as basis for the pre-characterizing part of the independent claims 1 and 7 discloses a method for treating municipal solid waste and the like, and a plant for carrying out the method. The object is to provide a suitable landfill material. A liquid percolate is discharged to a storage tank. A piston in a square cylindrical pressing basket is used for pressing liquid from the waste.

EP-A-359 250 discloses a process for recycling and reutilizing waste, in particular solid urban waste where by putrescible material is pressed from the dry combustible material using a press with a piston disclosed in IT-B-1 190 043.

EP-A-767 011 discloses a plant for mechanical-biological intermediate treatment of waste, said plant being described by means of a block diagram. In a separation press a liquid part is pressed from a solid part. The liquid part is fermented and the solid part is incinerated.

US-A-3 752 059 (DK-B-130 720) describes how not sorted waste may be compacted into blocks which may be stabilized by addition of for instance cement, which makes it possible to use them as building blocks in various construction works. During the compacting, which requires a certain moistening of the waste, a smaller amount of liquid with a certain organic content is obtained, said liquid being also stabilizable and possibly dryable and being according to the publication usable for fertilizing purposes. The publication does not mention source separated waste and the compacting apparatus described is not suited for treatment of such waste.

The object of the invention is to provide a method which solves the problems in the known methods and in such a manner that two waste fractions are obtained which, without hygienic or mechanical problems, may be transferred to biological decomposition and incineration, respectively.

The method according to the invention is characterized by the subject matter of the characterizing clause of claim 1.

The invention resides in the surprising observation that from commonly available source sorted domestic waste a liquid fraction may in practice be pressed out in an amount so considerable that it contains the major part of the plant nutrients P, K, N and the biogasifiable part of the waste, whereas the residual fraction will be quite dry and therefore suitable for energy utilization in waste incineration. By combining the pressing with a pasteurization which is made at the shredding or the pressing, a softening of plant parts in the waste takes place, whereby the liquid fraction gained by the pressing is increased.

The liquid fraction obtained by the method according to the invention is in particular usable as a subsidy in biogas plants decomposing animal manure. The liquid fraction is sanitized and therefore unproblematic to use in agricultural plants, and it contains the major part of the plant nutrients from the biowaste.

The heating to a temperature for sanitation is according to the invention preferably carried out prior to the pressing, whereby the plant used for the pressing can be serviced without any health risk for the personnel.

According to the invention the heating to pasteurization temperature is made by introducing steam during the mixing of the waste.

It is preferred according to the invention that the liquid biomass, until introduction into a biogas plant, is stored and transported at a temperature above approx. 65°C. Due to the hot storage of the biomass, biological activity is avoided therein during storage and transport, and the heat is utilized when received in the biogas plant, where normally a certain heating of the biomass is required prior to feeding to the reactor.

The pre-treatment of the biowaste may advantageously take place in a waste incineration plant, in which domestic waste is normally received and in which steam is normally available at a low price and in a sufficient amount.

Moreover, the invention relates to a plant for use in carrying out the method according to the invention. The plant comprises means for separating the waste into a fraction, from which not biologically decomposable material has been removed, and into a residual fraction. The plant according to the invention is characterized by the subject matter of claim 7.

According to the invention, the plant is preferably designed in such manner that the feed box is provided with at least one helical conveyor at the bottom of the box, said helical conveyor having an opposite pitch at its two ends, and the helical conveyor is provided with drive means for joining mixed material at the transition between the opposite pitches of the helical conveyor. In this embodiment of the mixing means the waste will shoot up like molehills in the middle of the feed box and will be easy to convey, the entire amount of waste passing within a period the centre area, where it is subjected to a supplementary treatment.

It is preferred according to the invention that a supply of steam is provided in the area at said transition. The combination of the joining of the waste in the transition area and the steam supply ensures an even and complete heating of the waste and consequently a reliable sanitizing.

Moreover, the plant preferably comprises according to the invention a helical conveyor between an area at the bottom of the box and the pressing device, said helical conveyor being adapted, in one operating position, to shred and mix the waste, and in a second operating position, to convey the waste to the pressing device. In the first operating position, the helical conveyor, which is provided with palette knives mounted in the bottom part thereof, takes care of the shredding.

According to the invention the plant preferably comprises an insulated and possibly heated intermediate storage tank and means for conveying the completely liquid or semi liquid material thereto.

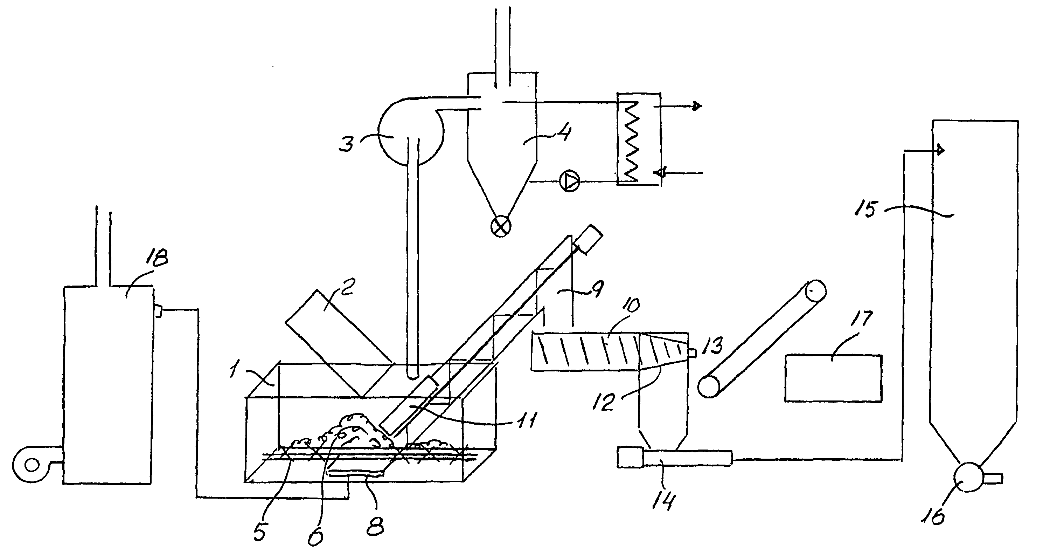

The invention will now be described in the following with reference to the drawing which shows a principal sketch of a plant for utilization of organic waste by separating it into two fractions.

The plant shown in the drawing for utilization of organic domestic waste comprises a feed box 1, in which the waste is received. The waste to be treated is in particular the organic part of normal domestic waste which has been collected in plastic or paper bags and which often have a certain content of erroneously sorted material like for instance cans, bottles or aluminium foil. The object of the plant is to divide the waste in two fractions, viz, a first liquid or semi-liquid fraction, which by great approximation has been freed from constituents which are not suited for biological decomposition, and a residual fraction which is suitable for decomposition in a normal waste incineration plant. The separation is performed by pressing of the waste under high pressure, whereby a partially liquid phase is removed which contains the biologically decomposable constituents, and a pressing rest which is quite dry and therefore suitable for energy utilization in an incineration plant. The pressing residue contains plastic and wrapping which have been used by the collection of the waste and the combustible articles, which due to a sorting error have reached the biological part of the domestic waste. Prior to the pressing, the waste is subjected to a shredding and mixing, and according to the preferred embodiment, the waste is heated in portions during this process to a temperature so high that the subsequent treatment does not give any inconvenience from a hygienic point of view. The heating step should take place before the pressing, the yield of the pressing being thereby increased. A pasteurization or sanitizing of the waste in portions is, however, not a prerequisite for the carrying out of the method. It will also be possible, for instance in a step between the feed box and the press worm to insert a continuously operating pasteurization device which takes care of the desired pasteurization of the waste during the transfer from the feed box to the press worm. The continuous course of the process offers certain advantages, but entails certain difficulties in connection with the maintenance of the equipment in the feed box.

The treatment described is not only suitable for source sorted domestic waste, but also for biological waste fractions from super markets or industries producing foodstuff. On account of the pasteurization taking place upon receipt of the waste, a very unpleasant waste fraction derived from treatment of waste water may also be treated. This material is called grate goods and is sorted out on the grates in the inlet constructions in purification plants. The material consists of faeces, cotton buds, condoms and other items flushed into the waste discharge system. Also this material can be divided into a liquid fraction which may be biogasified, and a comparatively dry fraction which may be incinerated.

The feed box 1 is provided with lids 2 and a sucking out 3 connected with a scrubber 4, the sucked out air being cleaned before being led out into the surroundings. The feed box 1 is at the bottom provided with a double helical conveyor 5 which at one end is wound counter-clockwise and at the other end is wound clockwise. It is rotated in such a manner that the material which has been unloaded into the feed box 1 is conveyed towards the middle of the box, where it is pressed up in a kind of molehill 6. Steam is supplied below this molehill through nozzle tubes and nozzles 8. The steam condenses in the material, which is mixed by means of the helical conveyors 5 until a sanitizing of the content of the feed box is obtained, for instance thereby that the content during a period has reached a temperature of more than 65°C.

Above the double helical conveyor 5, but immersed in the molehill, a worm conveyor 9 conveys the material to the press 10. The worm conveyor has two operating positions, viz. a first one, in which the worm, which is at the bottom provided with cutting means designed as a palette worm, runs backwards, thereby cutting or shredding the material during the mixing. A part 11 of the tube surrounding the worm is displaceable such that the pressed up material may get in contact with the worm in the first operating position. After the pasteurization, the worm conveyor is readjusted to the second operating condition, in which the displaceable tube part 11 is displaced downwards to surround the worm, following which the direction of rotation is changed such that the material in the feed box is conveyed to the press 10.

The press 10 comprises a press worm and a press basket 12 with counter-pressure conus or with contracted nozzle 13. In the press a liquid fraction is pressed off, said fraction being by means of a pump 14 transferred to an intermediate storage tank 15, in which it is stored at a temperature of above 65°C, which prevents the occurrence of bacteriological activity. A pump 16 may convey the material for further treatment, for instance in a biogas plant.

Moreover, a press residue is delivered from the press, said residue being collected in a transport box 17 and later transferred for incineration. The steam for the pasteurization is delivered from a steam generator 18. To minimize odour nuisances from the discharge air from the scrubber 4, the discharge from the scrubber may be delivered as combustion air for the steam generator, whereas condensate from the scrubber 4 is transferred to the feed box 1.

Feed water for the steam generator is treated with phosphates and oxygen-removing agents which can be accepted in the treated waste, such that boiler water discharge may be taken to the waste in the feed box 1.

Pilot tests with pressing of source sorted domestic waste have shown that it is possible in the liquid fraction to recover the major part of the plant nutrients P, K, N present in the waste as well as the biogasifiable part of the waste, which according to the tests indicates that 80-90% of the bio-decomposable part of the waste is transferred to the liquid fraction. The invention therefore provides an effective method for utilization of the energy content of biowaste and for attainment of a decomposition residue from the bio-decomposition, which decomposition residue may advantageously be used for fertilization. On account of the effective separation of the waste in a liquid and a solid fraction, a possible extraction of mollifiers is minimized, as well as other substances, which are difficult to biodecompose, from the waste to the liquid fraction.

## Claims

1. A method for utilizing source separated organic domestic waste and other types of substantially organic waste, by which method the waste is divided into a fraction, from which not biologically decomposable material has been removed, and a residual fraction with a small content of biologically decomposable material, wherein the waste is shredded and mixed, the shredded and mixed waste is subjected to a pressing for driving off the liquid biomass, the waste being during at least one of these steps heated to a temperature of pasteurization, and the press residue is removed preferably for incineration, **characterized in that** for pressing a pressing worm in a pressing basket (12) with counter-pressure conus or nozzle (13) is utilised, and that the liquid biomass is subjected to a biological decomposition.

2. A method according to claim 1, **charac-terized in that** the liquid fraction is used as a subsidy in connection with biogasification of residues in biogas plants based on liquid manure from domestic animals.

3. A method according to claim 1 or 2, **characterized in that** the heating to the pasteurization temperature level takes places prior to the pressing.

4. A method according to claim 3, **characterized in that** the heating is carried out in portions and in connection with shredding and mixing of the waste.

5. A method according to claim 3 or 4, **characterized in that** the heating to pasteurization temperature is carried out by introduction of steam into the waste during the mixing.

6. A method according to any of the claims 1-5, **characterized in that** the liquid biomass, until introduction into a biogas plant, is stored and transported at a temperature above approx. 65°C.

7. A plant for utilization of source separated organic domestic waste, which plant comprises means for separating the waste into a fraction, from which not biologically decomposable material has been removed, and into a residual fraction, comprising a feed box (1) with means (5) for supplying the waste delivered thereto to a shredding and mixing means (9) adapted to deliver the mixed, shredded waste to a pressing device (10), and being provided with means (14, 15) for collecting a fraction consisting of pressed off, liquid or semi-liquid material, **characterized in that** the pressing device (10) is a pressing worm in a pressing basket (12) with counterpressure conus or nozzle (13).

8. A plant according to claim 7, **characterized in that** the feed box (1) is provided with at least one helical conveyor (5) at the bottom of the box, said helical conveyor (5) having an opposite pitch at its two ends, and **in that** the helical conveyor (5) is provided with drive means for joining mixed material at the transition between the opposite pitches of the helical conveyor.

9. A plant according to claim 8, **characterized by** a supply of steam (8) in the area at said transition.

10. A plant according to claim 7 or 8, **characterized by** a helical conveyor (9) between an area at the bottom of the box (1) and the pressing device (10), said helical conveyor (9) being adapted, in one operating position, to ream and mix the waste, and in a second operating position, to convey the waste to the pressing device (10).

11. A plant according to any of the claims 7-10, **characterized in** comprising an insulated and possibly heated intermediate storage tank (15) and means (14) for conveying the liquid or semi liquid material thereto.

## Patentansprüche

1. Verfahren zur Verwendung von am Anfallsort sortiertem organischen Hausmüll und anderem im wesentlichen organischem Abfall, bei welchem Verfahren der Müll eingeteilt wird in einen Anteil, wovon nicht-biologisch zersetzbares Material entfernt worden ist, und einen Restanteil mit einem geringen Gehalt an biologisch zersetzbarem Material, wobei der Müll zerkleinert und vermischt wird, und der zerkleinerte und vermischte Müll zum Entfernen der flüssigen Biomasse einem Pressen unterzogen wird, und der Müll zumindest unter einer dieser Stufen auf eine Pasteurisierungstemperatur erhitzt wird, wobei der Pressrest vorzugsweise für Verbrennung entfernt wird, **dadurch gekennzeichnet, dass** zum Pressen eine Pressschnecke in einem Presskorb mit Gegendruckskonus oder -düse (13) benutzt wird, und dass die flüssige Biomasse einer biologischen Zersetzung unterzogen wird.

2. verfahren nach Anspruch 1, **dadurch gekennzeichnet, dass** der flüssige Anteil als Zuschuss in Verbindung mit Biovergasung von Rückständen in jauchebasierten Biogasanlagen verwendet wird.

3. Verfahren nach Anspruch 1 oder 2, **dadurch gekennzeichnet, dass** das Erhitzen auf Pasteurisierungstemperatur vor dem Pressen stattfindet.

4. Verfahren nach Anspruch 3, **dadurch gekennzeichnet, dass** das Erhitzen in Abschnitten und in Verbindung mit dem Zerkleinern und Mischen des Mülls durchgeführt wird.

5. verfahren nach Anspruch 3 oder 4, **dadurch gekennzeichnet, dass** das Erhitzen auf Pasteurisierungstemperatur durch Einführen von Dampf in den Müll während des Mischens erfolgt.

6. Verfahren nach einem der Ansprüche 1-5, **dadurch gekennzeichnet, dass** die flüssige Biomasse bis zum Einführen in eine Biogasanlage bei einer Temperatur über ca. 65°C gespeichert und transportiert wird.

7. Anlage zur Verwendung von am Anfallsort sortiertem organischen Hausmüll, welche Anlage Mittel zum Einteilen des Mülls in einen Anteil umfasst, wovon nicht biologisch zersetzbares Material beseitigt worden ist, und in einen Restanteil, umfassend einen Vorschubkasten (1) mit Mitteln (5) zum Befördern des zugeführten Mülls zu einem Zerkleinerungs- und Mischorgan (9), welches dazu eingerichtet ist den vermischten, zerkleinerten Müll an eine Pressvorrichtung (10) weiterzuleiten, und umfassend Mittel (14, 15) zum Aufsammeln eines Anteils bestehend aus gepresstem, flüssigem oder halb-flüssigem Material, **dadurch gekennzeichnet, dass** die Pressvorrichtung (10) eine Pressschnecke in einem Presskorb (12) mit Gegendruckskonus oder -düse (13) ist.

8. Anlage nach Anspruch 7, **dadurch gekennzeichnet, dass** der Vorschubkasten (1) am Kastenboden mit mindestens einem schraubenförmigen Förderer (5) versehen ist, der an seinen zwei Enden eine entgegengesetzte Steigung aufweist, und dass der schraubenförmige Förderer (5) mit Antriebsorganen zum Zusammenfügen des vermischten Materials beim Übergang zwischen den entgegengesetzten Steigungen des schraubenförmigen Förderers versehen ist.

9. Anlage nach Anspruch 8, **gekennzeichnet durch** eine Dampfzufuhr (8) im Bereich des Übergangs.

10. Anlage nach Anspruch 7 oder 8, **gekennzeichnet durch** einen schraubenförmigen Förderer (9) zwischen einem Bereich am Boden des Kastens (1) und der Pressvorrichtung (10), welcher schraubenförmige Förderer (9) dazu eingerichtet ist in einer Betriebsstellung den Müll aufzureissen und in einer zweiten Betriebsstellung den Müll zu der Pressvorrichtung (10) zu befördern.

11. Anlage nach einem der Ansprüche 7-10, **gekennzeichnet** dass sie einen isolierten und gegebenenfalls erwärmten Zwischenspeichertank (15) und Mittel (14) zum Leiten des flüssigen oder halb-flüssigen Materials zu diesem Tank umfasst.

## Revendications

1. Procédé pour utiliser des déchets ménagers organiques séparés à la source et d'autres types de déchets sensiblement organiques, procédé par lequel les déchets sont séparés en une fraction de laquelle des matériaux biologiquement non-décomposables ont été enlevés et en une fraction résiduelle à faible teneur en matériaux biologiquement décomposables, dans lequel les déchets sont déchirés et mélangés, les déchets déchirés et mélangés sont soumis à une compression pour faire sortir la biomasse liquide, les déchets étant chauffés jusqu'à une température de pasteurisation au cours d'au moins l'une de ces étapes, et le résidu de compression est enlevé et, de préférence, amené à l'incinération, **caractérisé en ce que**, pour la compression, on utilise une vis de compression dans une corbeille de compression (12) ayant un cône ou une buse (13) de contre-pression, et **en ce que** la biomasse liquide est soumise à une décomposition biologique.

2. Procédé selon la revendication 1, **caractérisé en ce que** la fraction liquide est utilisée en tant qu'adjonction en liaison avec la biogazéification de résidus dans des installations biogaz basées sur le lisier liquide des animaux domestiques.

3. Procédé selon la revendication 1 ou 2, **caractérisé en ce que** le chauffage jusqu'au niveau de la température de pasteurisation a lieu avant la compression.

4. Procédé selon la revendication 3, **caractérisé en ce que** le chauffage est réalisé par portions et en liaison avec le déchirement et le mélange des déchets.

5. Procédé selon la revendication 3 ou 4, **caractérisé en ce que** le chauffage jusqu'à la température de pasteurisation est réalisé par l'introduction de vapeur dans les déchets au cours du mélange.

6. Procédé selon l'une quelconque des revendications 1 à 5, **caractérisé en ce que** la biomasse liquide, jusqu'à son introduction dans une installation biogaz, est stockée et transportée à une température supérieure à environ 65°C.

7. Installation pour l'utilisation de déchets ménagers organiques séparés à la source, ladite installation comprenant des moyens destinés à séparer les déchets en une fraction de laquelle des matériaux biologiquement non-décomposables ont été enlevés et en une fraction résiduelle, comprenant une caisse d'alimentation (1) présentant des moyens (5) destinés à fournir les déchets y livrés à un moyen (9) de déchirement et de mélange adapté à livrer les déchets déchirés et mélangés à un dispositif de compression (10), et étant pourvue de moyens (14, 15) destinés à recueillir une fraction sous forme d'un matériau liquide ou semi-liquide exprimé, **caractérisée en ce que** le dispositif de compression (10) est une vis de compression dans une corbeille de compression (12) ayant un cône ou une buse (13) de contre-pression.

8. Installation selon la revendication 7, **caractérisé en ce que** la caisse d'alimentation (1) est pourvue d'au moins un transporteur à vis (5) au fond de la caisse, ledit transporteur à vis (5) présentant des pas de vis opposés à ses deux extrémités, et **en ce que** le transporteur à vis (5) est pourvu de moyens moteurs destinés à réunir les matériaux mélangés à la transition entre les pas de vis opposés du transporteur à vis.

9. Installation selon la revendication 8, **caractérisée par** une admission de vapeur (8) dans la zone de ladite transition.

10. Installation selon la revendication 7 ou 8, **caractérisée par** un transporteur à vis (9) entre une zone au fond de la caisse (1) et le dispositif de compression (10), ledit transporteur à vis (9) étant adapté, dans une position de service, à déchirer et à mélanger les déchets, et, dans une autre position de service, à transporter les déchets au dispositif de compression (10).

11. Installation selon l'une quelconque des revendications 7 à 10, **caractérisée en ce qu'**elle comprend un réservoir (15) de stockage intermédiaire isolé et éventuellement chauffé ainsi que des moyens (14) destinés à transporter le matériau liquide ou semi-liquide à celui-ci.
